# FASCICULE DE BREVET EUROPEEN

(11) **EP 2 670 677 B1**
(45) Date de publication et mention de la délivrance du brevet: **27.01.2016**
(21) Numéro de dépôt: 12742285.5
(22) Date de dépôt: 27.01.2012
(51) Int. Cl.: B65D 21/02

(54) **RÉCIPIENT MODULAIRE COMPOSÉ D'UNE PLURALITÉ DE CONTENEURS EMBOÎTABLES AXIALEMENT**
MODULARER BEHÄLTER AUS MEHREREN AXIAL VERNETZBAREN BEHÄLTERN
MODULAR RECEPTACLE FORMED BY A PLURALITY OF AXIALLY-NESTABLE CONTAINERS

(30) Priorité: 31.01.2011 FR 1100290
(43) Date de publication de la demande: 11.12.2013
(73) Titulaire: BTC Concept, 75001 Paris (FR)
(72) Inventeur: BOU-MEZRAG Mohammed, Seiffeddine, El-ouanoughi, 92390 Villeneuve la Garenne (FR); BRASSING, Yann-loïg, 94800 Villejuif (FR)
(74) Mandataire: Oudin, Stéphane
(86) Numéro de dépôt international: PCT/FR2012/000034
(87) Numéro de publication internationale: WO 2012/104499

(56) Documents cités:
- EP-A1- 2 298 659
- WO-A1-2009/024004
- WO-A1-2009/145317
- CH-A- 330 424
- DE-A1- 3 443 423
- FR-A1- 2 621 013
- GB-A- 2 367 276

## Description

### Domaine technique de l'invention.

L'invention concerne un récipient modulaire selon le préambule de la revendication 1 et est du domaine du moulage par soufflage exploitant une préforme, pour fabriquer un conteneur à goulot comportant une contre dépouille. Le conteneur est plus particulièrement un module d'un récipient composé d'une pluralité de tels conteneurs, qui sont agencés pour leur jonction axiale l'un à l'autre avec mise en coopération entre le fond d'un conteneur et le goulot d'un autre conteneur axialement voisin. Elle a pour objet un procédé de fabrication par soufflage d'une préforme pour l'obtention d'un tel conteneur comportant une contre-dépouille ménagée dans son fond, et un récipient composé d'une pluralité de conteneurs fabriqués à partir de la mise en oeuvre de ce procédé.

### Etat de la technique.

Parmi les conteneurs, on connaît les conteneurs à goulot qui sont agencés en bouteille ou analogue et qui sont destinés à contenir des produits liquides, boissons notamment. De tels conteneurs comportent à leur extrémité proximale un goulot de conformation tubulaire, qui est muni de moyens de jonction facilement réversible, par vissage notamment, avec un bouchon amovible. Le goulot est prolongé vers l'extrémité distale du conteneur par un col évasé, puis axialement par un corps qui est fermé à sa basé par un fond ménagé à son extrémité distale. Ce fond comporte fréquemment une cavité qui est ouverte vers l'extérieur et qui est de préférence munie d'ailettes radiales de renfort. Un tel agencement du fond permet de rigidifier le conteneur dont la paroi est souhaitée la plus fine possible, afin d'éviter sa déformation sous l'effet de la poussée exercée par le liquide qu'il contient, notamment dans le cas où le liquide est sous pression tel qu'une boisson gazeuse par exemple.

Il est courant de former de tels conteneurs par soufflage en exploitant une préforme installée à l'intérieur d'un moule. Cette technique de moulage est avantageuse pour obtenir des conteneurs à paroi fine à moindres coûts et à cadences de production élevées. Le moule est principalement composé d'au moins deux coquilles latérales et d'un fond. Les coquilles sont mobiles latéralement pour l'ouverture et la fermeture du moule, et comportent à leur sommet un organe de prise d'une collerette dont est munie la préforme pour son maintien à l'intérieur du moule pendant l'opération de soufflage. Le fond du moule est susceptible d'être axialement mobile pour former la cavité ouverte que comporte le fond du conteneur. On pourra par exemple se reporter au document WO02098631 (GOMEZ CAO JOSE LUIS) qui décrit un procédé de moulage d'un conteneur à goulot par soufflage d'une préforme mettant en oeuvre un tel moule.

Il a été proposé des récipients composés d'une pluralité de conteneurs à goulot pouvant être assemblés axialement avec une mise en coopération entre le fond d'un conteneur supérieur et le goulot d'un conteneur inférieur. Le fond du conteneur supérieur comporte une cavité qui loge le goulot prolongé du col évasé du conteneur inférieur, cette cavité comprenant un espace tubulaire de réception du dit goulot qui est prolongé par une poche évasée. L'assemblage entre le conteneur supérieur et le conteneur inférieur est obtenu par une mise en coopération entre des organes d'emboîtement axial coopérant que comportent respectivement les conteneurs. En position d'assemblage des conteneurs, un organe d'emboîtement du conteneur inférieur est encastré à l'intérieur d'un organe d'emboîtement de forme complémentaire que comporte le conteneur supérieur. Cet encastrement est obtenu par déformation élastique de l'un et/ou l'autre des organes d'emboîtement, et interdit une séparation spontanée des conteneurs sous l'effet du poids du conteneur inférieur, notamment lorsque le récipient est porté par l'intermédiaire du conteneur supérieur. Pour assembler ou séparer les conteneurs, l'opérateur exerce un effort pour provoquer une déformation de l'un et/ou de l'autre des organes d'emboîtement et leur mise en coopération ou inversement leur désolidarisation.

On pourra par exemple se reporter aux documents EP1321370 (PICI A.), CN2820721 (WEN XIAODONG), WO2009/024004 (HUANG DEGU ; DAI RENDE) et WO2007/135292 (BOU-MEZRAG M.), qui décrivent de tels récipients.

Se pose le problème de l'antagonisme entre la qualité de l'assemblage obtenu entre les conteneurs, et l'aisance de leur manipulation par un opérateur pour obtenir cet assemblage ou inversement la séparation des conteneurs. Se pose aussi le problème de concilier la présence des organes d'emboîtement avec la présence des bouchons amovibles dont sont équipés chacun des conteneurs. Il est à prendre en compte que les solutions proposées doivent s'inscrire dans le cadre d'une fabrication à moindres coûts et à cadences élevées des conteneurs, qui sont notamment des objets consommables à usage unique et alimentaire, devant de préférence pouvoir être formés avec une quantité minimale de matière. De telles contraintes de fabrication sont surmontées par la mise en oeuvre de la technique du moulage par soufflage d'une préforme qui est issue d'un matériau thermoplastique alimentaire bon marché et facilement recyclable, polyéthylène téréphtalate (PET) notamment ou autre matériau thermoplastique analogue. Cependant, les conteneurs ainsi obtenus sont fragiles, ce qui rend délicat leur organisation et leur faculté à procurer leur assemblage axial entre eux pour composer un récipient modulaire. Il est aussi à prendre en compte les phénomènes de retrait de matière propres à la technique de moulage par soufflage d'une préforme et les contraintes liées à la formation d'un conteneur à paroi fine d'épaisseur la plus homogène possible. Pour limiter les coûts d'obtention des conteneurs et permettre leur fabrication à des cadences élevées, il est aussi souhaitable de favoriser leur fabrication individuelle en une opération unique de soufflage à partir d'une préforme d'agencement quelconque, du type de celles existantes qui sont couramment commercialisées dans le domaine du moulage par soufflage et qui sont avantageusement pourvues des moyens standards conformes au mode habituel de prise par vissage du bouchon. La formation des organes d'emboîtement lors de la fabrication du conteneur induit la présence d'une ou de plusieurs contre-dépouilles devant être prises en compte.

Selon EP1321370, CN2820721 et WO2009/024004 par exemple, les organes d'emboîtement que comportent les conteneurs associent un bourrelet périphérique que comporte le conteneur inférieur, avec une gorge ménagée dans la cavité que comporte le conteneur supérieur. L'emboîtement est réalisé par encastrement du bourrelet à l'intérieur de la gorge, à partir d'une poussée axiale exercée par l'opérateur sur le conteneur inférieur vers le conteneur supérieur. Cette poussée axiale induit la déformation et le franchissement de l'arrête distale de la gorge par le bourrelet jusqu'à sa mise en butée contre l'arrête proximale de la gorge et son enserrement à l'intérieur de cette dernière. La séparation des conteneurs est obtenue à partir d'une traction axiale déformant l'arrête distale de la gorge jusqu'à extraction du bourrelet. Dans le cadre des contraintes de fabrication qui ont été énoncées, de tels conteneurs sont délicats à obtenir et leur assemblage axial n'est pas fiable. CN2820721 et WO2009/024004, qui divulgue un récipient comprenant toutes les caractéristiques du préambule de la revendication 1, proposent de compléter l'encastrement du bourrelet à l'intérieur de la gorge par des moyens de verrouillage de l'emboîtement axial réalisé, tels que par vissage, ce qui complexifie les modalités de moulage des conteneurs et/ou rend impossible leur formation avec une paroi fine obtenue par soufflage d'une préforme en PET. Par exemple encore et selon WO2007/135292, les organes d'emboîtement que comportent les conteneurs sont formés de rampes coopérant par appui axial et comportant des butées de fin de course. La manipulation des conteneurs par l'opérateur pour leur assemblage ou inversement leur séparation est confortable et l'emboîtement obtenu est satisfaisant, mais l'obtention des conteneurs par soufflage d'une préforme en PET dans le cadre des contraintes de fabrication qui ont été énoncées, est délicate voire impossible.

La structure du conteneur, et plus particulièrement la matière dont il est issu, la finesse de sa paroi et les modalités prévues pour son emboîtement axial avec un autre conteneur analogue, doivent être compatibles avec sa fabrication par moulage à partir de la technique avantageuse de soufflage exploitant une préforme pour fabriquer des objets à contre-dépouille, dans le cadre des contraintes qui ont été énoncées.

### Objet de l'invention.

La présente invention est définie par un récipient selon la revendication 1 annexée. Des modes de réalisation préférés sont définis dans les revendications dépendantes 2 à 12.

La présente invention a pour objet un récipient modulaire composé de conteneurs à goulot comportant des modalités d'emboîtement axial les uns aux autres par mise en coopération entre leur fond et leur goulot, qui sont fiables et confortable à mettre en oeuvre. Cet emboîtement axial entre les conteneurs est souhaité pouvant être procuré malgré, leur fabrication-avantageuse à moindres coûts et à cadences élevées par soufflage d'une préforme en matériau thermoplastique susceptible d'être un PET, malgré la finesse de leur paroi souhaitée la plus mince possible par économie de matière, et malgré la présence d'une contre-dépouille utile à la formation d'un organe d'emboîtement que comporte les conteneurs.

Un procédé de fabrication par moulage d'un conteneur à contre-dépouille par soufflage d'une préforme, qui ne fait pas partie de l'invention, est décrit plus loin et dont la mise en oeuvre est compatible avec l'obtention d'un conteneur à paroi fine qui est organisé pour permettre son emboîtement axial fiable et confortable avec un conteneur analogue pour composer le récipient modulaire. Un tel conteneur est souhaité apte à être formé à partir d'un matériau thermoplastique alimentaire bon marché et facilement recyclable, polyéthylène téréphtalate (PET) notamment ou autre matériau thermoplastique analogue, d'une paroi la plus mince possible.

La présente invention vise notamment à proposer de tels conteneur dans le cadre des contraintes qui ont été énoncées, en prenant en compte la compatibilité entre l'organisation structurelle du conteneur et les modalités de fabrication mises en oeuvre pour obtenir à moindres coûts et à cadences élevées ces conteneurs.

L'invention a consisté dans sa globalité à simplifier l'agencement structurel des conteneurs composant le récipient modulaire, notamment au regard des modalités mises en oeuvre pour leur emboîtement axial l'un à l'autre, en réduisant cet agencement à un appui axial monodirectionnel en liberté radiale entre des organes d'emboîtement coopérant que comprennent respectivement ces conteneurs. Cet appui axial monodirectionnel exclut une prise radiale entre les organes d'emboîtement, qui sont réduits respectivement à une collerette ménagée autour du goulot des conteneurs coopérant par appui axial monodirectionnel et liberté radiale avec un épaulement ménagé à la base d'une chambre tubulaire borgne que comprend en contre-dépouille une cavité ménagée en fond des conteneurs.

La fabrication par moulage des conteneurs à partir de la technique du soufflage d'une préforme est mise en oeuvre à moindres coûts et à cadences élevées. Les contraintes de fabrication liées à la technique du soufflage, tels que les phénomènes de retrait, la structure souhaitée simple du moule et les opérations respectives de formation des organes d'emboîtement sont dissociées entre la formation de la paroi du conteneur, la formation de la cavité en contre-dépouille et la formation de la collerette.

La chambre est obtenue au moyen d'un moule dont la structure permet sa mise en oeuvre à cadences élevées à partir de déplacements axiaux relatifs entre des organes montés sur le moule. La cavité est formée à partir d'une empreinte que comporte une base du moule, qui est montée axialement mobile pour former une chambre tubulaire prolongée par une poché évasée. La chambre est moulée en contre-dépouille à partir d'un déplacement axial relatif entre un piston et un organe rétractable monté conjointement mobile avec la base et à l'intérieur duquel circule le piston. Cet organe rétractable est muni d'une tête radialement expansible qui est manoeuvrable par le piston et qui émerge en prolongement axial de la paroi de l'empreinte formant la poche évasée. Les déplacements relatifs entre le piston et l'organe rétractable sont mis en oeuvre à partir de la mobilité sur le moule d'un ensemble composé de la base, de l'organe rétractable et du piston, et par des moyens de rappel élastique qui sont interposés entre le piston et un châssis porteur de la base assemblée et de l'organe rétractable. Le nombre des opérations de moulage successivement mises en oeuvre est réduit et la cinématique des organes mobiles à déplacer est simple.

Les dimensions radiales de la collerette peuvent être quelconques, seule son épaisseur étant utile à la fiabilité de l'emboîtement obtenu entre deux conteneurs axialement assemblés l'un à l'autre. Un anneau de saisie standard que comporte couramment les préformes pour leur maintien à l'intérieur du moule est susceptible d'être avantageusement exploité pour former la collerette. La mise en oeuvre d'une opération spécifique de formation de cette collerette autour du goulot est évitée. La collerette est robuste en étant d'une épaisseur significativement plus importante que l'épaisseur de la paroi du conteneur, qui peut être obtenue fine à partir d'un matériau thermoplastique alimentaire bon marché et facilement recyclable, tel que le PET ou autre matériau thermoplastique analogue, utilisé en faible quantité.

La face de l'empreinte ménageant la poche évasée peut comporter des reliefs de moulage d'alvéoles de réception de bossages que comporte le col évasé d'un autre conteneur. De tels alvéoles et bossages coopérant sont exploités pour conforter la stabilité axiale et radiale de l'emboîtement entre deux conteneurs et pour former des rampes génératrices d'un effort axial de séparation des conteneurs assemblés à partir d'un mouvement tournant relatif entre ces conteneurs aisément opéré par l'utilisateur. L'organisation et le moulage propres à ces reliefs sont dissociés de ceux des organes d'emboîtement qui sont respectivement ménagés sur le goulot et dans la cavité des conteneurs.

L'épaulement constitue un organe radialement et axialement étendu qui est ménagé à la base de la chambre opposée à sa face borgne et qui est apte à procurer un obstacle robuste à un retrait spontané d'une collerette ménagée sur le goulot d'un conteneur voisin, y compris dans le cas d'un conteneur comportant une paroi mince formé à partir d'un matériau plastique alimentaire facilement recyclable, tel que le PET ou autre matériau analogue. La robustesse de l'épaulement est déterminée par son extension axiale, qui peut être facilement adaptée selon les besoins indépendamment de l'épaisseur conférée à la collerette.

Selon une forme de réalisation, l'extension radiale de l'épaulement est de préférence constante, sa tranche libre étant géométriquement continue suivant une circonférence. Selon une variante, l'extension radiale de l'épaulement est variable, sa tranche libre étant de conformation crénelée, pour faciliter l'agencement d'une tête radialement expansible de formation par moulage en contre dépouille de la chambre et pour adapter au besoin la déformabilité locale de l'épaulement procurant l'emboîtement et la séparation entre deux conteneurs.

L'emboîtement entre deux conteneurs est facilement réalisé par un utilisateur à partir d'une poussée axiale qui provoque une déformation élastique de l'épaulement, l'opération inverse de séparation entre les conteneurs étant assistée à partir des bossages et des alvéoles coopérant. Les dimensions radiales de l'épaulement et de la collerette peuvent être distinctes l'une de l'autre dès lors que la dimension radiale de la chambre annulaire est supérieure à celle de la collerette qu'elle reçoit libre radialement. L'étendue radiale de la chambre est dissociée des contraintes de fiabilité et de robustesse de l'emboîtement axial à obtenir entre deux conteneurs à assembler. L'extension radiale de la chambre peut être librement adaptée selon le passage requis pour la réception d'un goulot muni d'un bouchon standard d'un autre conteneur.

Plus particulièrement selon un premier aspect de la présente invention, celle-ci a pour objet un récipient modulaire composé d'une pluralité de conteneurs à goulot emboîtables axialement successivement les uns aux autres, avec mise en coopération entre leur fond et leur goulot prolongé d'un col évasé. Les conteneurs comportent des organes d'emboîtement axial avec un conteneur voisin. L'un au moins des organes d'emboîtement est agencé en collerette qui est ménagée autour du goulot d'un conteneur, et au moins un autre est agencé en évidement de réception de la collerette, évidement que comporte une cavité ouverte sur l'extérieur qui est ménagée dans le fond d'un conteneur voisin. Cette cavité comporte un espace tubulaire borgne de réception d'un goulot, qui est prolongé par une poche évasée de réception du col évasé prolongeant le goulot.

Selon la présente invention, un tel conteneur est principalement reconnaissable en ce que l'évidement de réception de la collerette est formé par l'espace tubulaire de réception du goulot, qui est ménagé en contre dépouille dans le fond du conteneur. Cet espace tubulaire ménage une chambre de réception de la collerette en liberté radiale et en prise axiale monodirectionnelle contre un épaulement formé à la base de la chambre opposée à sa face borgne.

Les modalités d'assemblage entre les conteneurs du récipient sont structurellement simples et excluent une mise en prise par enterrement de la collerette par l'évidement qui la reçoit. Les modalités de moulage des conteneurs par soufflage d'une préforme ne sont pas affectées par la mise en oeuvre d'opérations complexes spécifiques à la formation des organes d'emboîtement, l'évidement de réception de la collerette étant ménagé à partir de la formation en contre-dépouille de la chambre. L'organe d'emboîtement coopérant avec la collerette est formé de l'épaulement, qui est obtenu par moulage de replis de la paroi du conteneur autour d'une empreinte, et plus particulièrement autour d'une tête radialement expansible que comporte un organe rétractable de moulage de la contre dépouille. Malgré la liberté de mouvement radiale et axiale entre la collerette et la chambre, la prise d'appui axial que prend la collerette contre l'épaulement procure un emboîtement entre les conteneurs qui est est fiable et robuste. L'agencement de l'épaulement par replis de la paroi du conteneur permet de lui conférer une extension axiale lui conférant sa robustesse sans accroître l'épaisseur de la paroi du conteneur qui peut être mince. Cet agencement de l'épaulement autorise sa déformation sous l'effet d'une poussée axiale opérée sur les conteneurs par un opérateur. La robustesse souhaitée de l'épaulement peut être facilement adaptée pour de quelconques conteneurs, à partir d'une variation de son extension axiale qui peut être facilement obtenue en faisant varier l'émergence de la tête radialement expansible hors de l'empreinte ménageant la poche évasée. L'épaisseur de la collerette est indépendante de l'extension axiale de l'épaulement, et peut être plus importante que l'épaisseur de la paroi du conteneur obtenu. La collerette peut être ménagée par surmoulage autour du goulot du conteneur lors de sa formation par soufflage, ou encore et de préférence être avantageusement constituée par un anneau de saisie par le moule de la préforme à partir de laquelle est formé par soufflage le conteneur, ou encore par un anneau ménagé à la base d'un bouchon amovible équipant le conteneur. Les extensions radiales de la collerette et de l'épaulement sont dissociées et celle du goulot muni d'un quelconque bouchon, dès lors que le passage du goulot muni du bouchon vers la chambre est autorisé.

Le conteneur peut être à paroi mince d'épaisseur constante en étant moulé par soufflage d'une préforme, et être issu d'un matériau thermoplastique alimentaire bon marché et facilement recyclable, polyéthylène téréphtalate (PET) notamment ou autre matériau thermoplastique analogue, sans affecter la qualité de l'emboîtement axial obtenu entre deux conteneurs pour composer le récipient.

Selon une forme préférée de réalisation, la collerette est pleine et est d'une épaisseur significativement supérieure à celle de la paroi du conteneur délimitant son volume intérieur, en étant par exemple avantageusement formée d'un anneau de saisie d'une préforme à partir de laquelle est moulée la paroi du conteneur par soufflage d'un matériau thermoplastique.

L'épaulement est notamment formé par la paroi du conteneur à partir d'une pluralité d'inflexions successives de cette paroi induisant son repli, qui ménagent une assise d'appui de la collerette prolongée par une entretoise d'extension générale axiale de séparation entre l'assise et la poche évasée.

Les conteneurs intègrent notamment des moyens d'immobilisation relative entre deux conteneurs assemblés, qui associent une prise d'appui axiaux antagonistes des conteneurs entre la collerette contre l'épaulement et le col évasé contre la poche évasée, et une prise d'appui radial entre des reliefs coopérant axialement étendus que comportent respectivement le col évasé et la poche évasée.

Plus particulièrement, le col évasé et la poche évasée comportent de préférence des organes coopérant de stabilisation radiale de l'emboîtement entre deux conteneurs assemblés, à l'encontre d'une liberté de mouvement radial de la collerette à l'intérieur de la chambre.

Plus particulièrement encore, le col évasé et la poche évasée comportent de préférence des organes coopérant d'appui latéral qui génèrent un effort axial entre deux conteneurs assemblés, sous l'effet d'un effort tournant relatif opéré entre ces conteneurs par un opérateur. L'opération de séparation des conteneurs assemblés est opérée confortablement malgré la robustesse de la prise d'appui de la collerette contre l'épaulement, à partir d'un mouvement tournant relatif entre les conteneurs effectué par l'utilisateur.

Selon une forme avantageuse de réalisation, les organes de stabilisation, les organes d'appui latéral et les reliefs coopérants sont confondus, en étant formés respectivement par au moins un bossage ménagé sur le col évasé d'un conteneur qui coopère avec une alvéole ménagée dans la poche évasée d'un conteneur voisin. La mise en coopération entre le bossage et l'alvéole procure une stabilisation radiale et un blocage axial de l'emboîtement entre deux conteneurs assemblés, et un confort de manoeuvre des conteneurs assemblés par un opérateur pour leur séparation. Les bossages et les alvéoles coopérant sont de préférence en pluralité en étant radialement répartis.

Selon une conformation préférée des surfaces de contact entre le bossage et l'alvéole, celles-ci sont transversalement arquées et ménagent des rampes d'appui latéral antagoniste qui sont axialement étendues en étant inclinées par rapport à l'axe d'extension générale des conteneurs. A titre indicatif, les rampes sont inclinées par rapport à l'axe d'extension générale des conteneurs d'un angle compris entre 30° et 75°, et plus spécifiquement entre 45° et 60°, selon les pentes d'évasement du col et de la poche.

De préférence, le goulot comporte à son extrémité libre des moyens de jonction facilement réversible avec un bouchon amovible, tel que par vissage notamment ou encore par clipage par exemple. De tels bouchons et moyens de jonction sont notamment ceux couramment exploités dans le domaine des conteneurs à goulot et plus particulièrement ceux couramment mis en oeuvre dans le cadre du moulage des conteneurs à goulot par soufflage exploitant une préforme.

Selon une forme particulière de réalisation, la collerette est formée par un anneau ménagé à la base du bouchon, joint au goulot du conteneur.

Selon un deuxième aspect qui ne fait pas partie de la présente invention, celui-ci a pour objet un procédé de moulage d'un conteneur à goulot par soufflage, exploitant une préforme en matière thermoplastique et mettant en oeuvre un moule d'orientation générale axiale. Le moule comporte :
*) des coquilles qui sont montées mobiles latéralement autour d'un axe d'orientation générale du moule et qui sont munies d'un organe de prise de la préforme par l'intermédiaire d'un anneau qu'elle comporte,
*) une base qui est montée mobile axialement suivant l'axe d'orientation générale du moule et qui est équipée de moyens de formation, dans le fond du conteneur à obtenir, d'une cavité à contre-dépouille ouverte vers l'extérieur. Les moyens de formation de la cavité associent une empreinte ménageant la cavité et un organe rétractable de formation de la contre-dépouille, qui est manoeuvrable entre une position déployée de moulage de la contre dépouille et une position escamotée autorisant le démoulage du conteneur à goulot obtenu.

Le procédé met en oeuvre un cycle de moulage du conteneur à goulot qui comprend au moins les opérations suivantes :
*) installation de la préforme à l'intérieur du moule et fermeture du moule par rapprochement des coquilles et de la base les unes vers les autres,
*) soufflage de la préforme pour former la paroi du conteneur à goulot à obtenir,
*) ouverture du moule et démoulage du conteneur à goulot obtenu par éloignement des coquilles et de la base les unes des autres, et
*)des opérations de manoeuvre de l'organe rétractable entre ses positions déployée et escamotée qui sont mises en oeuvre respectivement préalablement et postérieurement à l'opération de soufflage.

Un tel procédé de moulage comprend des opérations spécifiques de mise en déplacement relatif suivant l'axe d'orientation générale du moule entre la base et un piston circulant à l'intérieur de l'organe rétractable provoquant son passage entre ses positions déployée et escamotée. Plus particulièrement, les opérations de manoeuvre de l'organe rétractable entre ses positions déployée et escamotée sont provoquées par des opérations respectives de mise en déplacement relatif suivant l'axe d'orientation générale du moule entre la base et un piston circulant à l'intérieur de l'organe rétractable. Ces opérations de mise en déplacement relatif entre le piston et la base provoquent alternativement l'expansion et inversement la rétraction radiales d'une tête de conformation globale cylindrique que comprend l'organe rétractable. Cette tête ménage par moulage dans le fond du conteneur à obtenir une chambre tubulaire borgne en contre-dépouille que comprend la cavité.

A partir d'un déplacement axial relatif entre la base et le piston, la tête de l'organe rétractable forme un organe de moulage conjoint de la chambre et d'un organe d'emboîtement apte à coopérer avec un organe d'emboîtement complémentaire que comporte le goulot d'un conteneur analogue. La mobilité axiale du piston permet d'intégrer facilement les opérations de mise en déplacement relatif entre le piston et la base dans le cycle de moulage du conteneur, et la formation conjointe de la chambre et de l'organe d'emboîtement qui est constitué par l'épaulement que comprend la chambre en contre dépouille à sa base opposée à sa face borgne. L'opération de formation de la chambre associée à la formation de cet organe d'emboîtement est dissociée de l'opération de formation d'une poche évasée que comprend la cavité ménagée en fond du conteneur obtenu et qui est moulée par la face de l'empreinte réservée à cet effet. Les manoeuvres distinctes, au cours du cycle de moulage du conteneur, entre les moyens de formation de la poche évasée et de la chambre en contre dépouille, permettent de simplifier le cycle de moulage et les modalités à mettre en oeuvre pour respecter des dimensions et tolérances de fabrication propres à la poche évasée et à la chambre. Le piston, l'organe rétractable et la base peuvent être montés sur un même ensemble mobile axialement et manoeuvrable lors des opérations de fermeture et/ou d'ouverture du moule, un déplacement axial relatif entre la base assemblée à l'organe rétractable et le piston de manoeuvre de cet organe rétractable entre ses positions déployée et escamotée pouvant être facilement et aisément mis en oeuvre dans le cycle de moulage avec des cadences élevées. Les moyens que comporte le dispositif de moulage pour former l'organe d'emboîtement que comporte la cavité des conteneurs sont structurellement simples à mettre en oeuvre et sont aptes à supporter des cadences soutenues en limitant les opérations de maintenance et les risques de panne.

Le cycle de moulage comprend notamment les opérations suivantes :
*) préalablement à l'opération de fermeture du moule, une étape initiale de déplacement relatif entre le piston et la base assemblée à l'organe rétractable en une position de moulage, provoquant l'expansion radiale de la tête,
*) postérieurement à l'opération de soufflage et préalablement à l'opérations d'ouverture du moule, une étape intermédiaire de déplacement relatif entre le piston et la base assemblée à l'organe rétractable en une position de démoulage, provoquant la rétraction radiale de la tête.

Plus particulièrement,
*) l'étape intermédiaire est une opération de manoeuvre du piston vers une situation dégagée hors du moule, la base assemblée à l'organe rétractable étant maintenus en position de fermeture du moule. En situation dégagée, le piston est retiré de l'espace délimité entre les coquilles.
*) l'étape initiale est une opération de manoeuvre de la base et de l'organe rétractable concomitante à l'opération d'ouverture du moule.

Selon une forme avantageuse de réalisation, l'opération de fermeture du moule comprend une amenée, vers les coquilles et suivant l'axe d'orientation générale du moule, conjointement d'un ensemble mobile composé de la base, de l'organe rétractable et du piston en position de moulage dans laquelle la tête est expansée. L'étape intermédiaire associe une manoeuvre du piston en situation dégagée avec une retenue de la base et de l'organe rétractable prisonniers des coquilles, en position de démoulage dans laquelle la tête est rétractée. L'opération d'ouverture du moule induit une libération spontanée conjointe de la base et de l'organe rétractable hors des coquilles, et leur déplacement conjoint en position de moulage dans laquelle la tête est expansée.

Le procédé comprend en outre une opération de formation d'une collerette autour du goulot du conteneur à obtenir. Cette collerette est un organe d'emboîtement coopérant avec l'épaulement ménagé à la base de la chambre opposée à sa face borgne que comporte un autre conteneur analogue. L'opération de formation de la collerette est avantageusement effectuée par moulage de la préforme antérieurement à son installation à l'intérieur du moule et à l'opération de soufflage formant la paroi du conteneur. Plus particulièrement, cette opération de formation de la collerette correspond à une opération de formation sur la préforme de l'anneau dont elle est équipée pour coopérer avec l'organe de prise que comporte les coquilles en vue de son maintien à l'intérieur du moule.

Un dispositif pour la fabrication d'un conteneur à goulot par soufflage à partir d'une préforme en matière thermoplastique qui ne fait pas partie de l'invention est décrit plus loin. Ce dispositif est organisé pour mettre en oeuvre un procédé tel qu'il vient d'être décrit, en étant structurellement simple, fiable, pérenne et facile à mettre en oeuvre avec des cadences soutenues.

Ce dispositif comprend un bâti d'installation du moule, sur lequel bâti un ensemble mobile porteur de la base est monté mobile en translation suivant l'axe d'orientation générale du moule par des moyens de manoeuvre motorisés. Selon un agencement avantageux de ce dispositif, l'ensemble mobile comporte :
*) un socle porteur du piston,
*) un châssis porteur conjointement de la base et de l'organe rétractable, sur lequel châssis sont assemblés la base axialement traversée par l'organe rétractable,
*) des moyens de mobilité relative entre le socle et le châssis suivant l'axe d'orientation générale du moule. Ces moyens de mobilité comprennent notamment des moyens de guidage en translation suivant l'axe d'orientation générale du moule, qui sont interposés entre le socle et le châssis. Ces moyens de mobilité comprennent encore des moyens de déplacement relatif entre le châssis et le socle entre les dites positions de moulage et de démoulage.
Selon une forme avantageuse de réalisation des moyens de guidage, ceux-ci comprennent au moins une colonne portée par le socle coopérant avec une douille intégrée au châssis. De préférence, les colonnes sont au moins au nombre de deux et sont radialement réparties sur le socle, en s'étendant parallèlement au piston.

Les moyens de déplacement entre le châssis et le socle comprennent avantageusement :
*) les dits moyens de manoeuvre motorisés de l'ensemble mobile exploités pour la fermeture du moule, qui sont en prise sur le socle porteur du châssis en étant alternativement aptes soit à provoquer un déplacement conjoint du socle et du châssis en position de fermeture du moule, le piston provoquant la mise en position déployée de l'organe rétractable correspondante à la position de moulage dans laquelle la tête est expansée, soit à provoquer un déplacement du soclé vers la situation dégagée du piston en position de démoulage tandis que le châssis est retenu prisonnier par les coquilles en position de fermeture du moule,
*) des moyens de rappel en prises antagonistes sur le châssis et le socle, qui sont aptes à provoquer un déplacement du châssis en position de moulage en conséquence de sa libération par les coquilles manoeuvrées en position d'ouverture du moule.

Selon une forme avantageuse de réalisation, la base du moule associe :
*) une paroi de moulage de la poche évasée ouverte vers l'extérieur, que comprend la cavité à mouler dans le fond du conteneur à obtenir,
*) la tête radialement expansible de l'organe rétractable, qui émerge axialement hors de la paroi de moulage et qui constitue un organe de moulage dans le fond du conteneur à obtenir, de la chambre borgne qui prolonge en contre-dépouille la poche évasée. L'organe rétractable et/ou la tête expansible qu'il comporte sont susceptibles d'être équipés de moyens de réglage de la position d'émergence de la tête hors de la paroi du moulage pour adapter l'extension axiale de l'épaulement.

Un conteneur à goulot axialement emboîtable avec un autre conteneur à goulot analogue est fabriqué par la mise en oeuvre d'un procédé et au moyen d'un dispositif tels qu'ils viennent d'être décrits. Le conteneur comporte dans son fond une cavité ouverte sur l'extérieur associant une poche évasée prolongée par un espace tubulaire borgne apte à loger axialement le goulot prolongé d'un col évasé que comporte un conteneur analogue voisin. Le conteneur est en outre muni d'organes d'emboîtement pour son assemblage axial avec au moins un conteneur analogue, qui sont respectivement agencés pour au moins l'un en une collerette ménagée autour du goulot des conteneurs et pour au moins un autre par un évidement de réception de cette collerette ménagé dans la cavité.

Ce récipient est principalement reconnaissable en ce que l'espace tubulaire est agencée en chambre en contre dépouille formant à sa base opposée à sa face borgne un épaulement de prise d'appui axial monodirectionnel en liberté radiale d'une collerette ménagée autour du goulot d'un conteneur analogue.

La collerette est avantageusement formée d'un anneau périphérique que comporte le goulot. Selon des variantes respectives de réalisation, cet anneau est avantageusement constitué d'un anneau de prise d'une préforme à partir de laquelle est issu le conteneur moulé par soufflage de cette préforme, ou encore est avantageusement constitué d'un anneau ménagé à la base d'un bouchon amovible qui est rapporté sur le goulot du conteneur par l'intermédiaire de moyens de jonction facilement réversible, par vissage et/ou par clipage notamment.

On comprendra que l'invention est applicable à tout conteneur à goulot et à tout procédé d'obtention d'un tel conteneur à goulot quel que soit le contenu qui est dédié à être conditionné à l'intérieur du conteneur, et quel que soit la matière dont il est issu bien que les dispositions de l'invention soient particulièrement adaptées à la formation de conteneurs à goulot à paroi mince en matière thermoplastique alimentaire bon marché et facilement recyclable, tel que le PET.

### Description des figures.

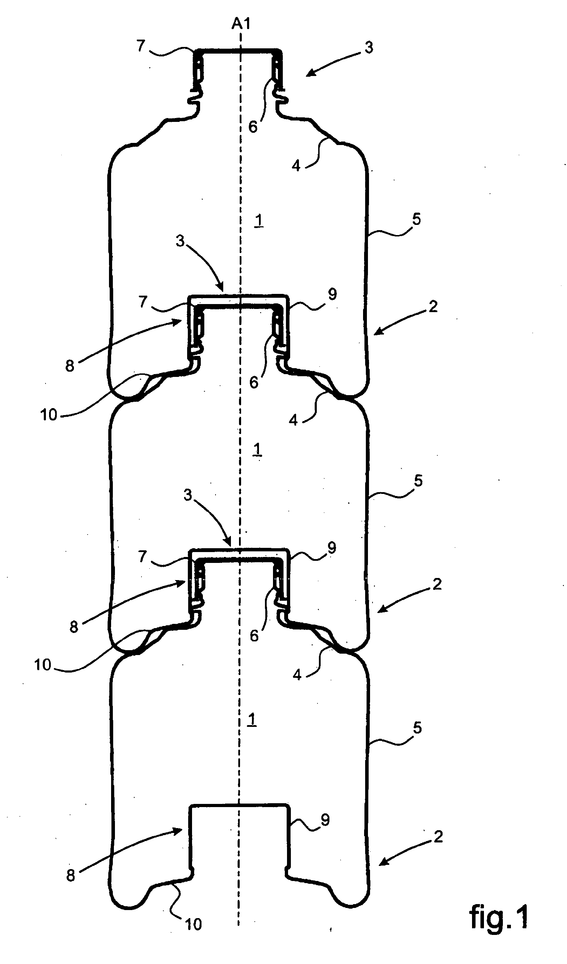

Des exemples de réalisation de la présente invention vont être décrits en relation avec les figures des planches annexées, dans lesquelles :
Là fig.1 est une illustration en coupe axiale d'un récipient modulaire composé d'une pluralité de conteneurs axialement assemblés en eux par emboîtement.
La fig.2 est un détail du récipient représenté sur la fig.1, illustrant la mise en coopération entre le fond d'un conteneur et le goulot d'un conteneur voisin.
Les fig.3 et fig.4 sont des illustrations respectivement de profil et en coupe axiale d'un conteneur que comprend le récipient modulaire représenté sur la fig.1.
Les fig.5 et fig.6 sont des illustrations de bout du conteneur représenté sur les fig.3 et fig.4, respectivement vu à partir de son goulot et à partir de son fond.
La fig.7 est une illustration en perspective d'un moule exploité pour former par soufflage d'une préforme un conteneur représenté sur les fig.3 à fig.6.
Les fig.8 à fig.10 sont des illustrations respectivement en perspective et en vues latérales d'un ensemble mobile que comprend un dispositif exploité pour le moulage d'un conteneur représenté sur les fig.3 à fig.6.
Les fig.11 à fig.16 sont des schémas qui illustrent successivement un procédé pour le moulage par soufflage d'une préforme d'un conteneur représenté sur les fig.3 à fig.6.
Les fig.17 et fig.18 sont des illustrations en coupe transversales d'une tête expansible de moulage respectivement en position rétractée et en position expansée, pour la formation d'une chambre annulaire en contre-dépouille que comporte un conteneur représenté sur les fig.3 à fig.6.

Sur la fig.1, un récipient modulaire est composé d'une pluralité de conteneurs 1 similaires qui sont successivement axialement assemblés les uns aux autres, avec mise en coopération entre le fond 2 d'un conteneur 1 et le goulot 3 d'un conteneur 1 voisin. Suivant leur axe d'extension générale A1, chacun des conteneurs 1 comporte depuis son extrémité proximale vers son extrémité distale le goulot 3 prolongé par un col évasé 4, puis une extension axiale 5 dont l'extrémité distale est fermée par le fond 2. Les goulots 3 sont munis de moyens de jonction 6 facilement réversible avec des bouchons amovibles 7, et les fonds 2 comportent chacun une cavité 8 de réception du goulot 3 prolongé par le col évasé 4 d'un conteneur 1 voisin. La cavité 8 est composée d'une chambre tubulaire borgne 9 de réception d'un goulot 3; qui est prolongée par une poche évasée 10 de réception d'un col évasé 4 prolongeant le goulot 3.

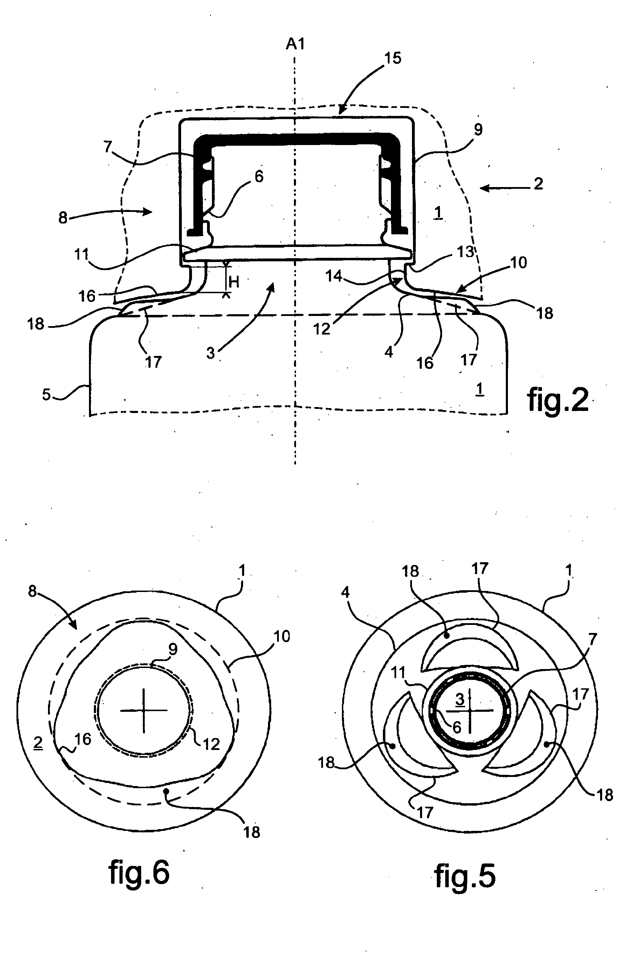

Sur les fig.2 à fig.4, l'assemblage entre deux conteneurs 1 voisins est réalisé par emboîtement, au moyen d'une collerette 11 qui est ménagée autour du goulot 3 des conteneurs 1, et qui coopère avec un épaulement 12 ménagé à la base de la chambre 9 opposée à sa face borgne 15. Deux conteneurs 1 sont axialement assemblés par un franchissement en force de l'épaulement 12 par la collerette, 11, à partir d'une poussée axiale exercée par l'opérateur de l'un à l'autre des conteneurs 1. L'épaulement 12 est formé à partir de replis successifs 13,14 de la paroi du conteneur 1, qui ménagent une assise 13 d'appui axial monodirectionnel pour la collerette 11. Cette assise 13 est prolongée par une extension axiale H de l'épaulement 12, qui forme une entretoise 14 entre l'assise 13 et la poche évasée 10 ménagée en prolongement de la chambre 9. La poussée axiale exercée par l'opérateur induit une déformation de l'épaulement 12 dans les zones d'inflexion correspondantes de la paroi du conteneur 1, cette déformation autorisant le passage de la collerette 11 jusqu'à sa réception à l'intérieur de la chambre 9. La collerette 11 est logée dans la chambre 9 en étant libre radialement et libre axialement suivant la direction opposée à celle de l'appui qu'elle prend spontanément par gravité contre l'épaulement 12. Sur l'exemple de réalisation illustré, la collerette 11 est formée par moulage autour du goulot 3, en étant avantageusement constituée d'un anneau de saisie par un moule de formation du conteneur 1 par soufflage, que comporte une préforme à partir de laquelle est issu le conteneur 1. Un tel anneau mis à profit pour constituer la collerette 11, est d'une épaisseur e1 significativement supérieure à celle e2 de la paroi du conteneur 1 obtenu à partir de cette préforme. A titre indicatif, la proportion de la différence d'épaisseur entre l'épaisseur e2 de la paroi du conteneur 1 et l'épaisseur e1 de la collerette 11 est de l'ordre comprise entre 5 et 10.

Selon une autre variante de réalisation de la collerette 11 visant aussi à simplifier les modalités de formation de la collerette 11 autour du goulot 3, celle-ci est susceptible d'être formée par un anneau ménagé à la base du bouchon 7.

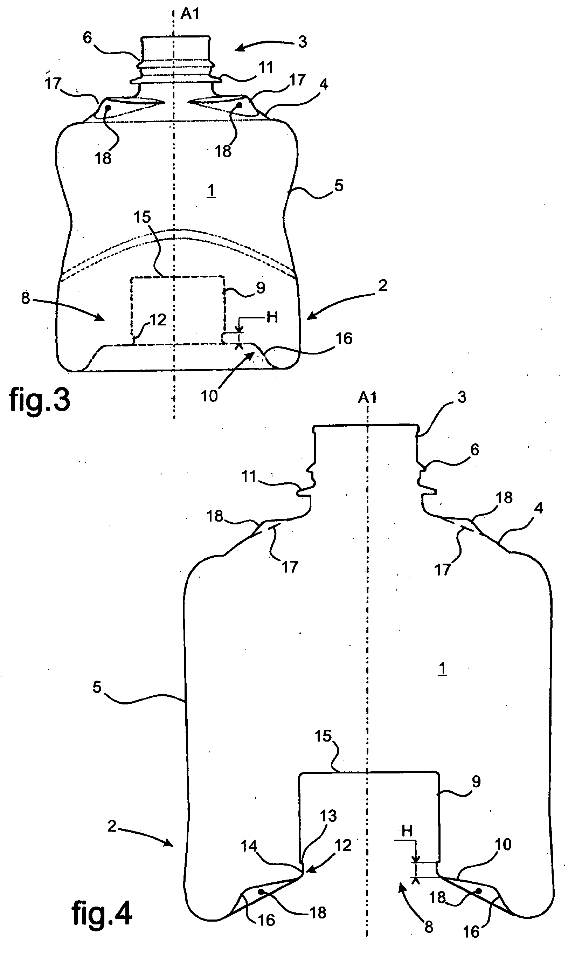

Sur les fig.3 à fig.6 l'emboîtement axial obtenu par mise en coopération entre la collerette 11 et l'épaulement 12 est verrouillé par des prises d'appui axial antagonistes et une prise d'appui radial que prennent l'un contre l'autre deux conteneurs 1 assemblés. La poche évasée 10 que comprend la cavité 8 des conteneurs comporte des alvéoles 16 de réception de bossages 17 que comporte le col évasé 4 des conteneurs 1. Lorsque deux conteneurs 1 sont assemblés, l'appui axial monodirectionnel que prend la collerette 11 contre l'épaulement 12 est antagoniste à l'appui axial monodirectionnel que prend le col évasé contre la poche évasée, et plus particulièrement les bossages 17 contre les alvéoles 16 qu'ils comportent respectivement. La mise en coopération des bossages 17 à l'intérieur des alvéoles 16 interdit une rotation spontanée des deux conteneurs 1 entre eux, à l'encontre de la liberté de mouvement axial de la collerette 11 logée à l'intérieur de la chambre 9. Les surfaces de contact entre les bossages 17 et les alvéoles 16 sont de conformation transversale arquée, tel qu'en demi-lune sur l'exemple illustré, et sont agencées en rampe 18 axialement inclinée par rapport à l'axe A1 d'extension générale des conteneurs 1, tel que d'un angle B de l'ordre compris entre 45° et 60°. L'appui axial que prend la collerette 11 contre l'épaulement 12 est souhaité le plus robuste possible, et tout au moins suffisant pour éviter une séparation spontanée entre deux conteneurs 1 assemblés sous l'effet du poids d'un conteneur 1 inférieur du récipient. Pour provoquer le franchissement de l'épaulement 12 par la collerette 11, l'opérateur peut aisément exercer un effort axial par poussée relative entre les conteneurs 1 à assembler. L'effort axial inverse à fournir pour séparer les conteneurs 1 est plus délicat à effectuer par l'opérateur. La conformation arquée et l'inclinaison des surfaces de contact entre les bossages 17 et les alvéoles 16 permettent d'induire un tel effort axial inverse à partir d'un mouvement tournant relatif entre les conteneurs 1, qui peut être confortablement effectué par l'opérateur.

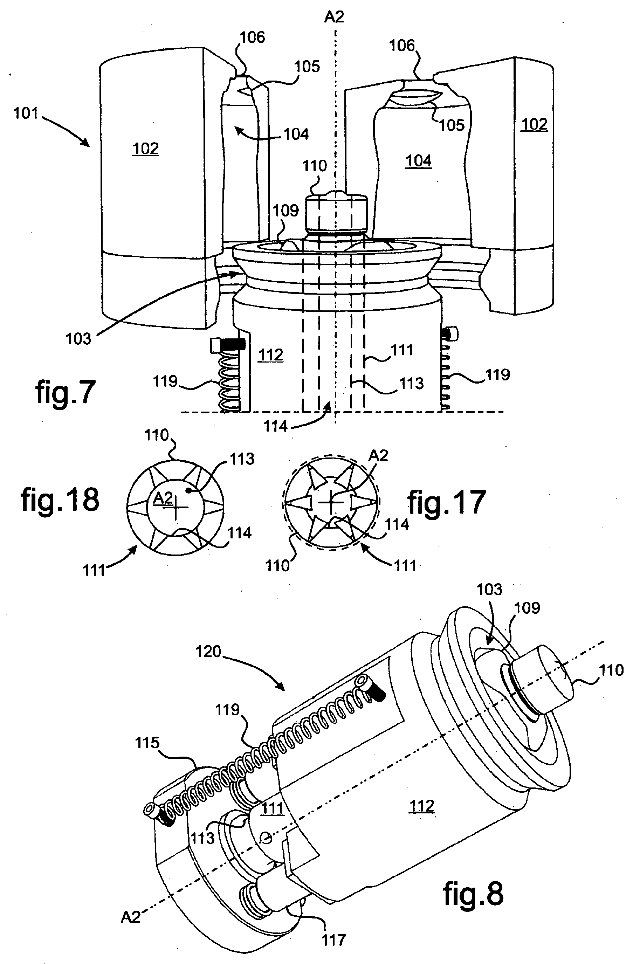

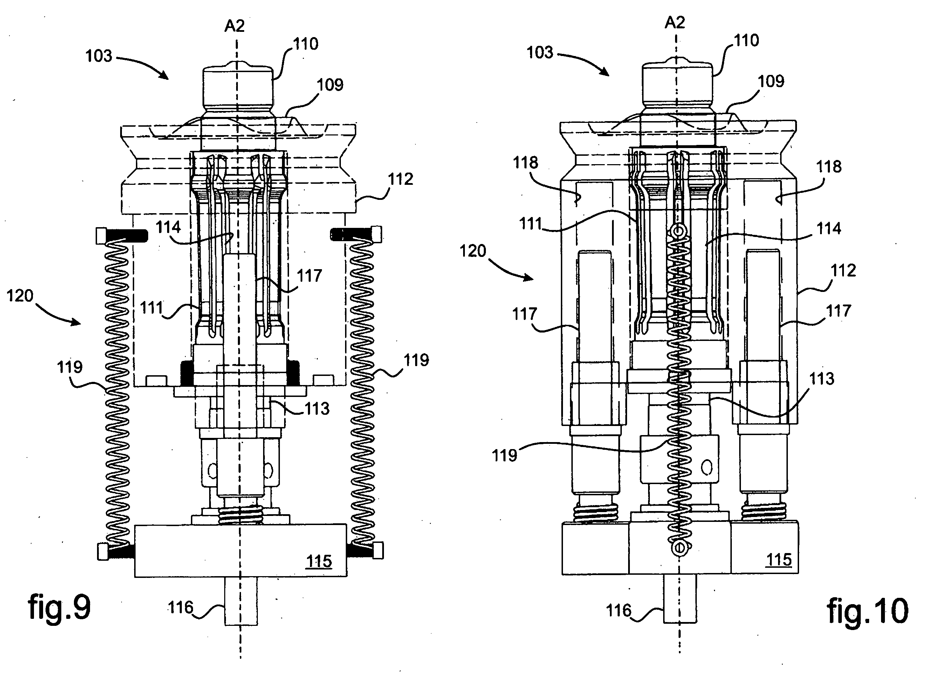

Sur les fig.7 à fig.16, un dispositif est agencé pour mouler un conteneur représenté sur les fig.3 et fig.4, par soufflage d'une préforme installée à l'intérieur d'un moule 101 plus particulièrement représenté sur la fig.7. Ce moule 101 comporte des coquilles 102 qui sont montées mobiles latéralement autour d'un axe A2 d'orientation générale du moule 101 en correspondance avec l'axe (A1) d'extension générale du conteneur 1 à obtenir, et une base 103 qui est montée mobile axialement suivant cet axe A2 d'orientation générale du moule 101. Les coquilles 102 comportent chacune une empreinte en creux 104 délitant une demi-paroi du conteneur 1 à obtenir. Des alvéolés 105 pour le moulage des bossages 17 sur le col évasé 4 des conteneurs 1 à obtenir, sont ménagées dans la zone correspondante au sommet de ces empreintes en creux 104. Les coquilles 102 comportent à leur sommet une feuillure 106 ou organe analogue de prise et de maintien d'une préforme 107 à l'intérieur du moule 101, par l'intermédiaire d'un anneau 108 que comporte la préforme 107 à cet effet. La base 103 est dotée de moyens de formation de la cavité 8 dans le fond 2 du conteneur 1 à obtenir, qui associent une empreinte en relief formant une paroi de moulage 109 de la poche évasée 10 et des alvéoles 16 de réception des bossages 17, avec une tête 110 radialement expansible de moulage de la chambre 9 en contre-dépouille. La tête 110 radialement expansible émerge axialement hors de la paroi de moulage 109, et est un composant d'un organe rétractable 111 qui est monté conjointement avec la base 103 sur un châssis 112 commun.

L'organe rétractable 111, et plus particulièrement la tête 110 qu'il comporte, est manoeuvrable par un piston 113 à partir d'un déplacement relatif entre l'organe rétractable 111 et le piston 113. L'organe rétractable 111 est agencé en tube qui est monté sur un châssis 112 en étant orienté suivant l'axe A2 d'orientation générale du moule 101 et en traversant axialement la base 103. L'agencement en tube de l'organe rétractable 111 ménage un canal 114 axial de circulation du piston 113, pour provoquer son passage entre ses positions escamotée et déployée. En position escamotée de l'organe rétractable 111, la tête 110 expansible est rétractée en une position de démoulage tel qu'illustré sur la fig.17 ; en position déployée de l'organe rétractable 111, la tête 110 est expansée en étant axialement traversée par le piston 113 en une position de moulage, tel qu'illustré sur la fig.18. Le piston 113 est porté par un socle 115 déplaçable par des moyens de manoeuvre motorisés 116, tel qu'un vérin électrique ou organe moteur analogue. Ces moyens de manoeuvre motorisés 116 sont exploités pour mouvoir la base 103 entre les positions d'ouverture et de fermeture du moule 101, et plus particulièrement pour mouvoir l'ensemble mobile 120 composé du socle 115 porteur du châssis 112, lui-même porteur de la base 103 et de l'organe rétractable 111 qui la traverse axialement. Le socle 115 est muni de colonnes 117 de guidage axial du châssis 112 porteur de la base 103 et de l'organe rétractable 111, qui coopèrent avec des douilles 118 ménagées dans le châssis 112. Des moyens de rappel 119 déformables sont interposés entre le châssis 112 et le socle 115, sur lesquels ils sont en prises antagonistes. De tels moyens de rappel 119 sont susceptibles d'être constitués de ressorts, de vérins pneumatiques ou de tout autre organe de retenue à l'encontre d'un déplacement relatif entre le châssis 112 et le socle 115 au-delà d'un seuil de contrainte prédéterminé.

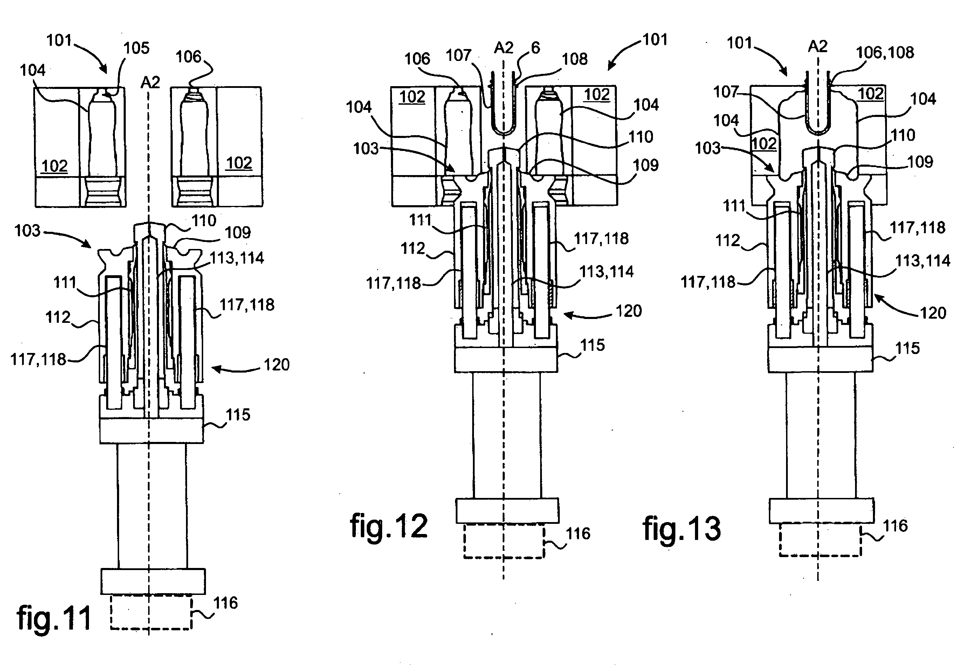

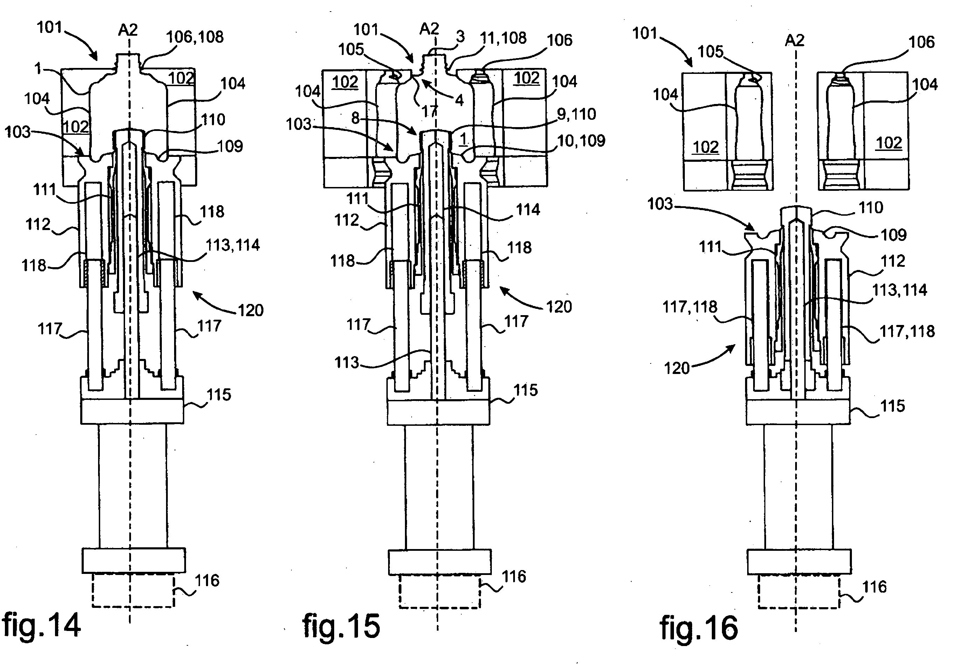

Sur les fig.11 à fig.16, un procédé met en oeuvre un dispositif représenté sur les fig.8 à fig.10 pour mouler le conteneur 1 représenté sur les fig.3 et fig.4, par soufflage d'une préforme 107 installée à l'intérieur du moule 101. Sur les fi.11 et fig.16, le dispositif est en position repos dans une étape initiale du procédé dans laquelle l'organe rétractable 111 est en position déployée à partir d'une expansion de la tête 110 en position de moulage. L'organe rétractable 111 loge axialement le piston 113, qui s'étend à l'intérieur du canal 114 dédié à sa circulation depuis le socle 115 vers la tête 110 pour induire son expansion. Une opération de fermeture du moule 101 est commandée, pour provoquer un rapprochement des coquilles 102 l'une de l'autre et une commande de la mise en oeuvre des moyens de manoeuvre motorisés 116 équipant le socle 115. Le socle 115 porteur du piston 113 et du châssis 112 sur lequel sont montés la base 103 et l'organe rétractable 111, est déplacé pour amener la paroi de moulage 109 et la tête 110 en position de moulage vers l'intérieur du moule 101, tel qu'illustré sur la fig.12. Le moule 101 étant en position de fermeture tel qu'illustré sur la fig.13, le soufflage de la préforme 107 est opéré pour mouler le conteneur 1 tel qu'illustré sur la fig.14. Le démoulage du conteneur 1 est réalisé en deux étapes. Dans une première étape, le socle 115 est déplacé vers la position de repos par les moyens de manoeuvre motorisés 116, tel qu'illustré sur la fig.15. Le châssis 112 est retenu prisonnier entre les coquilles 102 pour maintenir la base 103 et l'organe rétractable 111 à l'intérieur du moule 101. Un déplacement relatif entre le piston 113 et l'organe rétractable 111 est induit, à partir d'un retrait du piston 113 hors du moule 101 et plus spécifiquement hors de la tête 110, qui se rétracte radialement en position de démoulage pour autoriser le retrait du conteneur 1 obtenu. Dans une deuxième étape, un déplacement relatif entre l'organe rétractable 111 et le piston 113 est provoqué lors de l'opération d'ouverture du moule 101 tel qu'illustré sur la fig.16. Une ouverture du moule 101 libère le châssis 112 de sa prise par les coquilles 102 qui sont manoeuvrées en éloignement latéral l'une de l'autre. Le châssis 112 étant libéré de la prise exercée par les coquilles 102, celui-ci est entraîné vers la base du socle 115 sous l'effet de la tension exercée par les moyens de rappel 119.

La préforme 107 est une préforme standard du commerce couramment utilisée dans le domaine du moulage par soufflage, et est de préférence munie préalablement à son installation à l'intérieur du moule des moyens de jonction facilement réversible 6 du conteneur 1 avec le bouchon amovible 7. Selon une variante de mise en oeuvre du procédé, de tels moyens de jonction 6 sont susceptibles d'être moulés sur le goulot 3 du conteneur 1, simultanément à la formation de sa paroi par soufflage de la préforme 107.

Le procédé mis en oeuvre autorise une adaptation aisée du moule 101 pour la fabrication de conteneurs 1 de capacités et/ou de conformations extérieures spécifiques. Cette adaptation consiste seulement à changer les coquilles 102 et accessoirement la paroi de moulage 109 de la poche évasée 10, et le cas échéant à ajuster la position d'émergence de la tête expansible 110 hors de la paroi de moulage 109 pour adapter l'extension axiale H de l'épaulement 12 selon l'effort d'emboîtement qui doit être fourni pour assembler deux conteneurs 1.

## Revendications

1. Récipient modulaire composé d'une pluralité de conteneurs (1) à goulot emboîtables axialement successivement les uns aux autres avec mise en coopération entre leur fond (2) et leur goulot (3) prolongé d'un col évasé (4), les conteneurs (1) comportant des organes d'emboîtement axial (11,12,16,17) avec un conteneur voisin, dont au moins l'un est agencé en collerette (11) ménagée autour du goulot (3) d'un conteneur (1) et dont au moins un autre est agencé en évidement de réception de la collerette (11), évidement que comprend une cavité (8) ouverte sur l'extérieur qui est ménagée dans le fond (2) des conteneurs (1) et qui comporte un espace tubulaire borgne (9) de réception d'un goulot (3) prolongé par une poche évasée (10) de réception du col évasé (4) prolongeant ce goulot (3), dans lequel l'évidement est formé par l'espace tubulaire (9) qui est ménagé en contre dépouille dans le fond (2) du conteneur (1), cet espace tubulaire ménageant une chambre (9) de réception de la collerette (11) en liberté radiale **caractérisé en ce que** la collerette (II) est en prise axiale monodirectionnelle contre un épaulement (12) formé à la base de la chambre (9) opposée à sa face borgne (15).

2. Récipient selon la revendication 1, **caractérisé en ce que** la collerette (11) est pleine et est d'une épaisseur (e1) significativement supérieure à celle (e2) de la paroi du conteneur (1) délimitant son volume intérieur.

3. Récipient selon la revendication 2, **caractérisé en ce que** la collerette (11) est formée d'un anneau de saisie d'une préforme à partir de laquelle est moulée la paroi du conteneur (1) par soufflage d'un matériau thermoplastique.

4. Récipient selon l'une quelconque des revendications précédentes, **caractérisé en ce que** l'épaulement (12) est formé par la paroi du conteneur (1) à partir d'une pluralité d'inflexions successives de cette paroi, qui ménagent une assise (13) d'appui de la collerette (11) prolongée par une entretoise (14) d'extension générale axiale (H) de séparation entre l'assise (13) et la poche évasée (10).

5. Récipient selon l'une quelconque des revendications précédentes, **caractérisé en ce que** les conteneurs (1) intègrent des moyens d'immobilisation relative entre deux conteneurs (1) assemblés, associant une prise d'appuis axiaux antagonistes des conteneurs (1) entre la collerette (11) contre l'épaulement (12) et le col évasé (4) contre la poche évasée (10), et une prise d'appui radial entre des reliefs (16,17) coopérant axialement étendus que comportent respectivement le col évasé (4) et la poche évasée (10).

6. Récipient selon l'une quelconque des revendications précédentes, **caractérisé en ce que** le col évasé (4) et la poche évasée (10) comportent des organes (16,17) coopérant de stabilisation radiale de l'emboîtement entre deux conteneurs (1), à l'encontre d'une liberté de mouvement radial de la collerette (11) à l'intérieur de la chambre (9).

7. Récipient selon l'une quelconque des revendications précédentes, **caractérisé en ce que** le col évasé (4) et la poche évasée (10) comportent des organes (16,17) coopérant d'appui latéral qui génèrent un effort axial entre deux conteneurs (1) assemblés, sous l'effet d'un effort tournant relatif opéré entre ces conteneurs (1).

8. Récipient selon les revendications 5 à 7, **caractérisé en ce que** les organes de stabilisation, les organes d'appui latéral et les reliefs coopérants sont confondus, en étant formés respectivement par au moins un bossage (17) ménagé sur le col évasé (4) d'un conteneur (1) qui coopère avec une alvéole (16) ménagée dans la poche évasée (10) d'un conteneur (1) voisin.

9. Récipient selon la revendication 8, **caractérisé en ce que** les surfaces de contact entre le bossage (17) et l'alvéole (16) sont transversalement arquées et ménagent des rampes (18) d'appui latéral antagoniste qui sont axialement étendues en étant inclinées par rapport à l'axe (A1) d'extension générale des conteneurs (1).

10. Récipient selon la revendication 8, **caractérisé en ce que** les rampes (18) sont inclinées par rapport à l'axe (A1) d'extension générale des conteneurs (1) d'un angle compris entre 30° et 75°.

11. Récipient selon l'une quelconque des revendications précédentes, **caractérisé en ce que** le goulot (3) comporte à son extrémité libre des moyens de jonction (6) facilement réversible avec un bouchon amovible (7).

12. Récipient selon la revendication 11, **caractérisé en ce que** la collerette (11) est formée par un anneau ménagé à base du bouchon (7).

## Patentansprüche

1. Modularer Behälter, der sich aus einer Vielzahl von axial miteinander vernetzbaren Behältern (1) mit Flaschenhals unter Zusammenwirkung zwischen deren Boden (2) und deren Flaschenhals (3) zusammensetzt, der sich in einem ausgestellten Hals (4) fortsetzt, wobei die Behälter (1) Organe zur axialen Vernetzung (11, 12, 16, 17) mit einem benachbarten Behälter enthalten, von denen zumindest einer als Halsring (11) angeordnet ist, der um den Flaschenhals (3) eines Behälters (1) angebracht ist, und von denen zumindest ein anderer als Aussparung zur Aufnahme des Halsrings (11) angeordnet ist, wobei die Aussparung eine nach außen offene Vertiefung (8) umfasst, die im Boden (2) der Behälter (1) angeordnet ist, und die einen rohrförmigen Blindraum (9) zur Aufnahme eines Flaschenhalses (3) umfasst, der sich in einer ausgestellten Tasche (10) zur Aufnahme des ausgestellten Halses (4) als Fortsetzung dieses Flaschenhalses (3) fortsetzt, wobei die Aussparung durch den rohrförmigen Raum (9) gebildet wird, der im Boden (2) des Behälters (1) hinterschnitten angeordnet ist, wobei dieser rohrförmige Raum eine Kammer (9) zur Aufnahme des Halsrings (11) bildet, der sich dort radial frei bewegen kann, **dadurch gekennzeichnet, dass** der Halsring (11) axial in eine Richtung gegen einen Absatz (12) gehalten wird, der an der Basis der Kammer (9) gegenüber ihrer Blindseite (15) gebildet wird.

2. Behälter nach Anspruch 1, **dadurch gekennzeichnet, dass** der Halsring (11) voll ist und eine Stärke (e1) aufweist, die signifikant größer ist, als jene (e2) der Wand des Behälters (1), die dessen Innenvolumen eingrenzt.

3. Behälter nach Anspruch 2, **dadurch gekennzeichnet, dass** der Halsring (11) aus einem Greifring eines Rohlings gebildet wird, aus dem durch Blasen eines thermoplastischen Materials die Wand des Behälters (1) geformt wird.

4. Behälter nach irgendeinem der vorherigen Ansprüche, **dadurch gekennzeichnet, dass** der Absatz (12) durch die Wand des Behälters (1) aus einer Vielzahl von aufeinanderfolgenden Krümmungen dieser Wand gebildet wird, die eine Basis (13) zur Auflage des Halsringes (11) bilden, die sich um ein sich im Allgemeinen axial (H) erstreckendes Zwischenstück (14) zur Trennung zwischen der Basis (13) und der ausgestellten Tasche (10) fortsetzt.

5. Behälter nach irgendeinem der vorherigen Ansprüche, **dadurch gekennzeichnet, dass** die Behälter (1) Mittel zur gegenseitigen Blockierung zweier zusammengesetzter Behälter (1) enthalten, wobei das jeweils gegenseitige axiale Abstützen der Behälter (1) zwischen dem Halsring (11) und dem Absatz (12) und zwischen dem ausgestellten Hals (4) und der ausgestellten Tasche (10) und das jeweils radiale Abstützen zwischen sich axial erstreckenden und zusammenwirkenden Reliefs (16, 17), die jeweils am ausgestellten Hals (4) und an der ausgestellten Tasche (10) angeordnet sind, zusammenwirken.

6. Behälter nach irgendeinem der vorherigen Ansprüche, **dadurch gekennzeichnet, dass** der ausgestellte Hals (4) und die ausgestellte Tasche (10) Organe (16, 17) enthalten, die zur radialen Stabilisierung der Vernetzung zwischen den Behältern (1) im Gegensatz zu einer radialen Bewegungsfreiheit des Halsrings (11) im Inneren der Kammer (9) zusammenwirken.

7. Behälter nach irgendeinem der vorherigen Ansprüche, **dadurch gekennzeichnet, dass** der ausgestellte Hals (4) und die ausgestellte Tasche (10) Organe (16, 17) enthalten, die zur seitlichen Anlage zusammenwirken, die unter Einwirkung einer Umfangskraft, die zwischen diesen Behältern (1) ausgeübt wird, eine axiale Kraft zwischen zwei zusammengesetzten Behältern (1) erzeugen.

8. Behälter nach den Ansprüchen 5 bis 7, **dadurch gekennzeichnet, dass** die Stabilisierungsorgane, die Organe zur seitlichen Anlage und die zusammenwirkenden Reliefs zusammengenommen sind, indem sie jeweils durch zumindest einen Buckel (17) gebildet werden, der auf dem ausgestellten Hals (4) eines Behälters (1) angeordnet ist, der mit einer Aushöhlung (16) zusammenwirkt, die in der ausgestellten Tasche (10) eines benachbarten Behälters (1) angeordnet ist.

9. Behälter nach Anspruch 8, **dadurch gekennzeichnet, dass** die Kontaktflächen zwischen dem Buckel (17) und der Aushöhlung (16) quer gebogen sind und Rampen (18) zur entgegenwirkenden seitlichen Auflage bilden, die sich axial erstrecken, und im Verhältnis zur Achse (A1), entlang derer sich die Behälter (1) im Allgemeinen erstrecken, geneigt sind.

10. Behälter nach Anspruch 8, **dadurch gekennzeichnet, dass** die Rampen (18) im Verhältnis zur Achse (A1), entlang derer sich die Behälter (1) im Allgemeinen erstrecken, in einem Winkel zwischen 30° und 75° geneigt sind.

11. Behälter nach irgendeinem der vorherigen Ansprüche, **dadurch gekennzeichnet, dass** der Flaschenhals (3) an seinem freien Ende Mittel zur Verbindung (6) umfasst, die mit einem abnehmbaren Verschluss (7) einfach reversibel sind.

12. Behälter nach Anspruch 11, **dadurch gekennzeichnet, dass** der Halsring (11) durch einen Ring gebildet wird, der an der Basis des Verschlusses (7) angeordnet ist.

## Claims

1. Modular receptacle composed of a plurality of necked containers (1) that are successively axially nestable with each other with placing in cooperation between their base (2) and their neck (3) extended by a flared section (4), the containers (1) comprising members for axial nesting (11, 12, 16, 17) with a neighbouring container, of which at least one is arranged as a flange (11) arranged around the neck (3) of a container (1) and of which at least one other is arranged as a recess for receiving the flange (11), said recess is comprised in a cavity (8) open to the exterior which is arranged in the base (2) of the containers (1) and which comprises a blind tubular space (9) for receiving a neck (3) extended by a flared pocket (10) for receiving the flared section (4) extending this neck (3), wherein the recess is formed by the tubular space (9) which is arranged as an undercut in the base (2) of the container (1), with this tubular space arranging a chamber (9) for receiving the flange (11) with radial freedom **characterised in that** the flange (11) is bearing axially in one direction against a shoulder (12) formed in the base of the chamber (9) opposite its blind surface (15).

2. Receptacle according to claim 1, **characterised in that** the flange (11) is solid and is of a thickness (e1) that is significantly thicker than that (e2) of the wall of the container (1) delimiting its interior volume.

3. Receptacle according to claim 2, **characterised in that** the flange (11) is formed of a ring for the taking of a preform from which is moulded the wall of the container (1) by blow-moulding a thermoplastic material.

4. Receptacle as claimed in any preceding claim, **characterised in that** the shoulder (12) is formed by the wall of the container (1) using a plurality of successive inflections of this wall, which arrange a bearing seat (13) for the flange (11) extended by a spacer (14) of generally axial extension (H) of separation between the seat (13) and the flared pocket (10).

5. Receptacle as claimed in any preceding claim, **characterised in that** the containers (1) incorporate means for relative immobilisation between two assembled containers (1), associating an antagonistic axial bearing engagement of the containers (1) between the flange (11) against the shoulder (12) and the flared section (4) against the flared pocket (10), and a radial bearing engagement between cooperating axially extended reliefs (16, 17) that respectively the flared section (4) and the flared pocket (10) comprise.

6. Receptacle as claimed in any preceding claim, **characterised in that** the flared section (4) and the flared pocket (10) comprise cooperating members (16, 17) for the radial stabilisation of the nesting between two containers (1), against a radial freedom of movement of the flange (11) inside the chamber (9).

7. Receptacle as claimed in any preceding claim, **characterised in that** the flared section (4) and the flared pocket (10) comprise cooperating members (16, 17) for lateral bearing which generate an axial force between two assembled containers (1), under the effect of a relative rotating force carried out between these containers (1).

8. Receptacle according to claims 5 to 7, **characterised in that** the members for stabilising, the members for lateral bearing and the cooperating reliefs are confounded, by being formed respectively by at least one boss (17) arranged on the flared section (4) of a container (1) which cooperates with a cavity (16) arranged in the flared pocket (10) of a neighbouring container (1).

9. Receptacle according to claim 8, **characterised in that** the contact surfaces between the boss (17) and the cavity (16) are transversally arched and arrange ramps (18) of antagonistic lateral bearing which are axially extended by being inclined in relation to the axis (A1) of general extension of the containers (1).

10. Receptacle according to claim 8, **characterised in that** the ramps (18) are inclined in relation to the axis (A1) of general extension of the containers (1) by an angle between 30° and 75°.

11. Receptacle as claimed in any preceding claim, **characterised in that** the neck (3) comprises at its free end means of junction (6) that are easily reversible with a removable cap (7).

12. Receptacle according to claim 11, **characterised in that** the flange (11) is formed by a ring arranged at base of the cap (7).
